# EUROPÄISCHE PATENTSCHRIFT

(11) **EP 2 855 174 B1**
(45) Veröffentlichungstag und Bekanntmachung des Hinweises auf die Patenterteilung: **13.07.2016**
(21) Anmeldenummer: 13726163.2
(22) Anmeldetag: 27.05.2013
(51) Int. Cl.: B60C 23/00

(54) **EINRICHTUNG ZUM REDUZIEREN DES IN EINEM FAHRZEUGLUFTREIFEN BEFINDLICHEN FÜLLDRUCKES**
DEVICE FOR REDUCING THE INFLATION PRESSURE IN A VEHICLE PNEUMATIC TYRE
MÉCANISME DESTINÉ À RÉDUIRE LA PRESSION DE GONFLAGE D'UN PNEU DE VÉHICULE

(30) Priorität: 30.05.2012 DE 202012101972 U
(43) Veröffentlichungstag der Anmeldung: 08.04.2015
(73) Patentinhaber: PTG Reifendruckregelsysteme GmbH, 41468 Neuss (DE)
(72) Erfinder: HAAG, Christopher, 50737 Köln (DE); TIGGES, Bertram, 51467 Bergisch Gladbach (DE); TIGGES, Martin, 41468 Neuss (DE); BROCK, Thomas, 41749 Süchteln (DE)
(74) Vertreter: Haverkamp, Jens
(86) Internationale Anmeldenummer: PCT/EP2013/060832
(87) Internationale Veröffentlichungsnummer: WO 2013/178568

(56) Entgegenhaltungen:
- WO-A2-2009/010054

## Beschreibung

Die Erfindung betrifft eine Einrichtung zum Reduzieren des in einem Fahrzeugluftreifen befindlichen Fülldruckes umfassend einen Ventilblock mit einem diesen durchgreifenden Luftablasskanal, an dessen Eingang der Reifeninnendruck ansteht und dessen Ausgang in die Umgebung mündet, in welchen Luftablasskanal ein in Richtung zum Ausgang schließendes, einen Ventilkörper umfassendes Rückschlagventil eingeschaltet ist, und einem in einer in dem Ventilblock befindlichen Zylinderbohrung, pneumatisch einseitig ansteuerbaren Steuerkolben mit einer Kolbenfläche, die größer ist als die Querschnittsfläche des Ventilskörpers des Rückschlagventils.

Derartige Einrichtungen werden typischerweise im Zusammenhang mit Reifendruckregelanlagen eingesetzt. Reifendruckregelanlagen verfügen typischerweise über eine fahrzeugseitige Druckluftquelle sowie eine entsprechende Sensorik und Aktorik, um während der Fahrt den aktuellen Reifendruck an unterschiedliche Gegebenheiten anpassen und damit verändern zu können. Um Druckluft von der Fahrzeugseite zu der Reifenseite übertragen zu können, werden Drehdurchführungen benötigt. Je nach dem, ob die Reifendruckregelanlage ein- oder mehrkanalig ausgelegt ist, muss ebenfalls die Drehdurchführung ein- oder mehrkanalig konzipiert sein. In vielen Fällen erfolgt eine Reduzierung des Reifeninnendruckes in umgekehrter Weise unter Verwendung der fahrzeugseitigen Sensorik und unter Verwendung der Drehdurchführung. Die Strecke, die bei einer gewünschten Druckerniedrigung die Luft vom Reifen über die Drehdurchführung zurücklegen muss, ist relativ lang. Zudem sind die Querschnitte der hierfür verwendeten Leitungen in aller Regel nicht übermäßig groß. Dieses hat zur Folge, dass eine Reifendruckerniedrigung eine gewisse Zeit benötigt, bis sich der gewünschte reduzierte Reifeninnendruck eingestellt hat. Für einige Anwendungen ist jedoch gewünscht, dass der Reifeninnendruck sehr viel rascher reduziert werden kann, als dieses mit derartigen Anlagen möglich ist. Erforderlich ist dieses etwa bei Einsatzfahrzeugen, wenn diese eine befestigte Straße, auf der diese mit einem höheren Reifendruck fahren müssen, verlassen, um auf unbefestigten Wegen weiterzufahren. Auf unbefestigten Wegen werden derartige Fahrzeuge mit einem geringeren Reifendruck gefahren, um eine größere Radaufstandsfläche zu erzielen. Um eine raschere Radentlüftung zum Herbeiführen einer Reifendruckerniedrigung herbeizuführen, sind radseitig angeordnete Ablassventile bekannt geworden. Bei diesen Einrichtungen wird etwa durch pneumatische Ansteuerung ein Luftablassventil geöffnet, welches die Luft unmittelbar in die Umgebung ablässt. Betätigt werden derartige Ventile pneumatisch, und zwar unter Verwendung der ohnehin bei Reifendruckregelanlagen vorhandenen pneumatischen Steuerung zum Erhöhen des Reifeninnendruckes.

Neben Reifendruckregelanlagen, bei denen zum Übertragen der Druckluft vom Chassis in die Reifen Drehdurchführungen eingesetzt werden, sind auch Reifendruckregelanlagen bekannt geworden, bei denen die notwendigen Aggregate sämtlich radseitig untergebracht sind. Eine solche Reifendruckregelanlage ist beispielsweise aus DE 103 60 730 A1 bekannt, bei der die diesbezüglichen Aggregate als kompakte Baueinheit auf einem bei Bewegung des Fahrzeuges synchron zur Raddrehzahl rotierenden Bauteil angeordnet sind. Gemäß einer in diesem Dokument beschriebenen Ausgestaltung wird zum Ansteuern der radseitigen Aktorik eine Funkstrecke verwendet. Demzufolge ist radseitig ein entsprechender Empfänger vorgesehen, der die empfangenen Schaltbefehle an die radseitig angeordnete Aktorik weitergibt. Teil einer solchen Reifendruckregeleinrichtung ist auch ein unmittelbar in die Umgebung mündendes Luftablassventil, über das der Reifendruck erniedrigt werden kann.

Bei einigen Sonderfahrzeugen, bei denen eine Änderung des Reifendruckes während der Fahrt gewünscht wird, kann aus Platz- und oder Sicherheitsgründen eine Drehdurchführung zum Übertragen von Druckluft in die Reifen nicht eingesetzt werden. Auch die Verwendung einer Einrichtung ohne Drehdurchführung, bei der die Aktorik auf einem synchron zum Rad rotierenden Bauteil angeordnet ist, ist in vielen Fällen aus Platzgründen nicht möglich. Zudem ist bei solchen Ausgestaltungen eine Energieversorgung nicht unproblematisch, vor allem wenn diese durch eine Batterie bereitgestellt werden soll.

Bei bestimmten Einsatzfahrzeugen besteht der Wunsch nach einer vereinfachten und robusten Reifendruckregelung, mit der eine Reifendruckerniedrigung nicht nur in kurzer Zeit, sondern auch ohne Drehdurchführung möglich ist, und zwar bei einem möglichst geringen elektrischen Energieeinsatz.

Eine Einrichtung gemäß dem Oberbegriff des Anspruchs 1 ist aus DE 103 60 730 A1 bekannt.

Ausgehend von diesem Stand der Technik liegt der Erfindung die Aufgabe zu Grunde, ein Lüftungsventil mit möglichst geringem Betätigungsenergieaufwand zu schaffen.

Gelöst wird diese Aufgabe erfindungsgemäß durch eine eingangs genannte Einrichtung, bei der der Steuerkolben eine als Stellstange ausgeführte Kolbenstange aufweist, wobei der Steuerkolben mit seiner Kolbenstange zu dem Ventilkörper des Rückschlagventils dergestalt angeordnet ist, dass der Steuerkolben, wenn pneumatisch betätigt, mit seiner Kolbenstange auf den Ventilkörper des Rückschlagventils wirkt, und bei der der Ventilblock eine durch den Reifeninnendruck beaufschlagte pneumatische Steuerleitung, die auf der Betätigungsseite des Steuerkolbens in die Zylinderbohrung mündet, und ein Steuerventil zum Öffnen und Schließen der pneumatischen Steuerleitung aufweist.

Das besondere bei dieser Einrichtung ist, dass zum Schalten eines Ventils zum Ablassen von Luft aus einem luftgefüllten Reifen im Zuge einer gewünschten Reifendruckemiedrigung der im Fahrzeugreifen herrschende Druck verwendet wird. Mithin wird bei dieser Ausgestaltung in geschickter Weise der im Reifen herrschende Überdruck bzw. die darin gespeicherte Energie für die vorbeschriebenen Zwecke genutzt. Die benutzerseitig angesteuerte Aktorik braucht nur geringen Anforderungen zu genügen. Somit arbeitet diese Einrichtung letztendlich nach Art eines Relais, bei dem mit geringer Energie ein Aktor geschaltet wird, um unter Ausnutzung des im Reifeninneren herrschenden Druckes das Ablassventil zu öffnen. Die ansteuerbare Aktorik schaltet bei dieser Einrichtung ein Ventil, welches typischerweise als Auf-Zu-Ventil konzipiert ist, in einer Steuerleitung und nicht ein solches, welches in den Luftablasskanal integriert ist. Das Besondere an diesem Konzept ist, dass vor allem ein Schließen des Steuerventils in der Steuerleitung nicht gegen die Strömung der ausströmenden Luft erfolgen muss. Überdies wird man den Querschnitt der Steuerleitung typischerweise deutlich kleiner auslegen als den Querschnitt des Luftablasskanals. Entsprechend kleiner kann das Ventil und dementsprechend kleiner die dieses Ventil ansteuernde Aktorik ausgelegt sein. Bei dieser Einrichtung verfügt der Ventilblock über ein öffenbares Rückschlagventil als eigentliches Luftablassventil, das in den Luftablasskanal eingeschaltet ist. Betätig wird dieses durch einen über die Steuerleitung ansteuerbaren Steuerkolben, in welcher Steuerleitung der aktuelle Reifeninnendruck ansteht, ebenso wie auf dem Ventilkörper des Rückschlagventils, wenn dieses in einer Geschlossenstellung ist. Der Steuerkolben verfügt über eine Kolbenstange, ausgelegt als Stell- bzw. Betätigungsstange, die, wenn der Steuerkolben pneumatisch betätigt ist, gegen den Ventilkörper des Rückschlagventils wirkt und in diesem Zuge dieses öffnet. Um dieses zu ermöglichen, ist die Kolbenfläche des Steuerkolbens größer als die Querschnittsfläche des Ventilkörpers des Rückschlagventils. Auf diese Weise ist es möglich, das Rückschlagventil mit dem in dem Reifen zur Verfügung stehenden Druck zu öffnen.

Vor dem Hintergrund der Möglichkeit, dass die Stell- und Steueraktorik sehr klein bauend ausgelegt werden kann, kann als Stellaktor ein elektrisch arbeitender Stellaktor, beispielsweise ein Elektromagnetventil als Steuerventil eingesetzt werden. Die notwendige Energie kann ein solches Elektromagnetventil über eine Batterie oder eine Batterieanordnung erhalten. Aufgrund der nur kleinen benötigten Bauart eines solchen Elektromagnetventils benötigt dieses auch nur ein geringes Maß an elektrischer Energie. Folglich können, ohne eine solche Batterie oder Batterieanordnung nachladen zu müssen, eine Vielzahl von Schaltvorgängen durchgeführt werden. Positiv wirkt sich hier auch aus, dass der Strömungsquerschnitt des Luftablasskanals groß gewählt werden kann und damit eine Reifendruckerniedrigung in kurzer Zeit, d.h. in wenigen Sekunden durchgeführt werden kann. Entsprechend kurz braucht auch nur ein solches Elektromagnetventil angesteuert zu werden. Dieses schont die Energieressourcen zum Stellen des Elektromagnetventils.

Die vorbeschriebene Einrichtung zum Erniedrigen des in einem Fahrzeugluftreifen befindlichen Fülldruckes kann auch mit einer anderen Steueraktorik ausgerüstet sein, beispielsweise mit einem pneumatisch angesteuerten Ventil. Eine solche Lösung bietet sich dann an, wenn eine Reifendruckregelanlage mit einer Drehdurchführung vorhanden ist und diese über einen pneumatischen Steuerkreis verfügt.

Bei einer Ausgestaltung der Erfindung ist vorgesehen, dass die Kolbenstange des Steuerkolbens auch bei nicht aktiviertem Steuerkolben an der Ausgangsseite des Ventilkörpers des in den Luftablasskanal eingeschalteten Rückschlagventils anliegt. Prinzipiell kann der Ventilkörper des Rückschlagventils auch mit der Kolbenstange eine gegenständliche Einheit bilden, beispielsweise an dieser angeformt sein. Der Ventilkörper des Rückschlagventils und/oder der zum Öffnen durch die Ventilöffnung des Rückschlagventils hindurchreichende Abschnitt der Kolbenstange kann derart gestaltet werden, damit die freie durchströmbare Querschnittsfläche in diesem Abschnitt des Luftablasskanals bei von seinem Ventilsitz abgehobenen Ventilkörper und somit bei geöffnetem Rückschlagventil möglichst groß ist. Zu diesem Zweck können der Ventilkörper und/oder die Kolbenstange radiale Einkerbungen aufweisen.

Gemäß einer Weiterbildung ist vorgesehen, dass der Steuerkolben sowie das Rückschlagventil jeweils gegen die Kraft einer Rückstellfeder arbeiten. Durch diese Maßnahme wird die Rückstellung des Ventilkörperrückschlagventils bzw. des Steuerkolbens in die Schließ- bzw. Ausgangsstellung unterstützt, vor allem dann, wenn der im Reifen herrschende Druck relativ gering ist. Zudem wird hierdurch gewährleistet, dass das Rückschlagventil auch dann schließt, wenn ein Versagen der elektrischen Schaltaktorik vorliegt.

Als zweckmäßig wird eine Ausgestaltung angesehen, bei der die Längsachse des Steuerkolbens mit seiner Kolbenstange und die Längsachse der Ventilöffnung des Rückschlagventils miteinander fluchten. Bei dieser Ausgestaltung ist vorgesehen, dass zwischen der den Steuerkolben aufnehmenden Zylinderbohrung und dem Rückschlagventil ein Luftauslassabzweig vorgesehen ist, der Teil des Luftauslasskanals ist. Bei einer solchen Ausgestaltung ist der Luftauslasskanal winkelig ausgeführt.

In einer weiteren Ausgestaltung ist vorgesehen, unmittelbar am Felgenbett ein Verteilerstück anzuordnen, durch das eine Wegsamkeit in das Reifeninnere und zumindest zwei Abgänge bereitgestellt sind. Bei dieser Ausgestaltung stellt der eine Abgang des Verteilerstücks den Steuerleitungsabgang dar, während der andere Abgang die Wegsamkeit für die Reifenentlüftung darstellt. Der Steuerleitungsabgang ist mit dem Steuerleitungseingang des Ventilblockes verbunden. Der Entlüftungsabgang ist an den Entlüftungseingang des Ventilblockes angeschlossen. Diese Reifenentlüftungseinrichtung unterscheidet sich von der vorbeschriebenen somit nur dadurch, dass der Steuerleitungsabgriff an der Luftentnahmestelle unmittelbar im bzw. am Felgenbett angeordnet ist. Interessanterweise hat sich gezeigt, dass bei einer solchen Auslegung der Reifenentlüftungseinrichtung eine Reifenentlüftung besonders präzise gesteuert werden kann.

Ein solches Verteilerstück kann neben den beiden vorbeschriebenen Abgängen ein oder mehrere weitere Anschlüsse aufweisen. Ein solcher Anschluss kann beispielsweise zum Herstellen einer Verbindung mit einem Zwillingsreifen verwendet werden. Ein anderer Anschluss kann beispielsweise einer Reifenbefüllung dienen und ist zu diesem Zweck mit einem Reifenventil ausgestattet.

Angesteuert werden kann eine solche Einrichtung durch auf einer Funkstrecke übermittelten Schaltbefehlen. Bei einer solchen Ausgestaltung verfügt die Einrichtung über einen Funkempfänger, der die Schaltsignale empfängt und das Elektromagnetventil entsprechend ansteuert.

Die vorbeschriebene Einrichtung eignet sich nicht nur als Basislösung, wenn lediglich eine Reifendruckerniedrigung gewünscht wird, sondern auch als Teil komplexerer Lösungen, beispielsweise solchen, bei denen der Reifeninnendruck mittels eines Drucksensors überwacht wird. Ein solcher Regelkreis kann ausschließlich aus Komponenten aufgebaut werden, die radseitig montiert sind. Es versteht sich, dass dieses, wie vorbeschrieben, nur eine Reifendruckerniedrigung beinhaltet. Allerdings kann die vorbeschriebene Einrichtung auch Teil einer Reifendruckregelanlage sein, bei der nicht eine Reifendruckerniedrigung, sondern auch Reifendruckerhöhung vorgenommen werden kann.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: Eine perspektivische Ansicht einer Einrichtung zum Reduzieren des in einem Fahrzeugreifen befindlichen Fülldruckes,
- **Fig. 2:**: eine schematisierte Schnittdarstellung des Ventilblockes der Einrichtung der Figur 1 in einer ersten Stellung seines als Rückschlagventil ausgebildeten Luftablassventils,
- **Fig. 3:**: der Ventilblock der Figur 2 in einer zweiten Stellung seines als Rückschlagventil ausgebildeten Luftablassventils,
- **Fig. 4:**: eine perspektivische Ansicht einer weiteren Einrichtung zum Reduzieren des in einem Fahrzeugreifen befindlichen Fülldruckes,
- **Fig. 5:**: eine perspektivische Ansicht eines Rades mit einer Reifenentlüftungseinrichtung gemäß einer weiteren Ausgestaltung,
- **Fig. 6:**: eine schematisierte perspektivische Ansicht eines Teils der Reifenentlüftungseinrichtung der Figur 5 und
- **Fig. 7a, 7b:**: ein Entlüftungsventil, angeordnet am luftablassseitigen Ausgang der Reifenentlüftungseinrichtung der Figur 5.

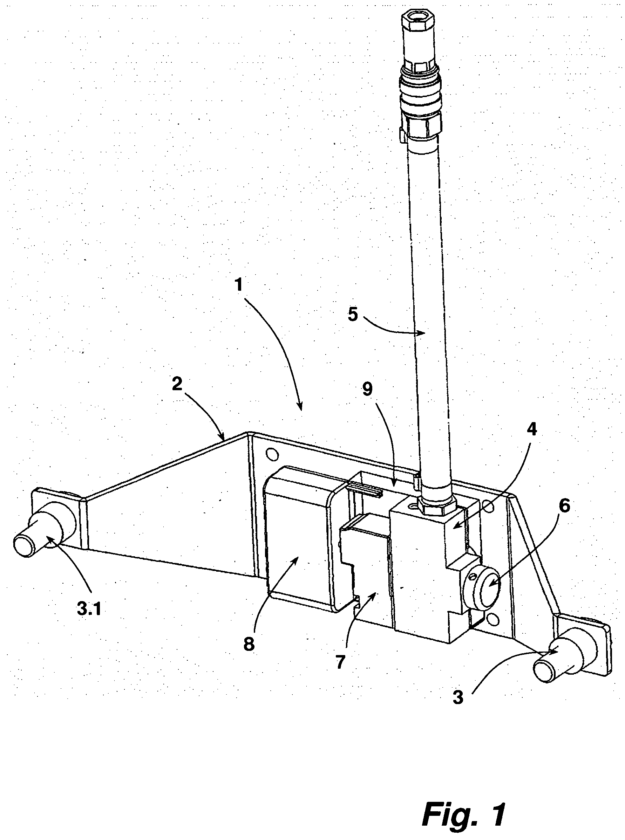

Eine Einrichtung zum Reduzieren des in einem Fahrzeugreifen befindlichen Fülldruckes - eine Reifenentlüftungseinrichtung 1 - umfasst einen Träger 2, an dem die Komponenten der Einrichtung 1 angeordnet sind. Der Träger 2 verfügt über Befestigungsbolzen 3, 3.1, mit denen dieser an der Felgenschüssel eines Fahrzeugrades, insbesondere in der Nähe zur Nabe angeschlossen werden kann. Die Einrichtung 1 umfasst als zentrales Bauteil einen Ventilblock 4. Bei dem Ventilblock 4 handelt es sich um ein Bauteil, welches als "Block" im engeren Sinne oder auch durch Verbinden einzelner Bauteile ausgeführt sein kann. Bei dem in Figur 1 dargestellten Ausführungsbeispiel ist der Ventilblock 4 im engeren Sinne ausgeführt. Den Ventilblock 4 durchgreift ein Luftablasskanal. An diesem ist eingangsseitig ein Schlauch 5 angeschlossen. Der Schlauch 5 steht mit seinem anderen Ende mit dem Reifeninneren in Verbindung. Mithin ist der Schlauch 5 mit dem im Reifeninneren herrschenden Luftdruck beaufschlagt. Der Ausgang des Luftablasskanals ist bei dem dargestellten Ausführungsbeispiel durch eine Schmutzkappe 6 verschlossen. Diese dient dem Zweck, dass in die ansonsten offene Ausgangsöffnung keine Verschmutzungen eindringen können.

Dem Ventilblock 4 zugeordnet ist ein elektromagnetisches Steuerventil 7, mit dem die Ansteuerung des Ventilblockes 4 geschaltet wird. Zur Stromversorgung des Steuerventils 7 dient bei dem dargestellten Ausführungsbeispiel eine Batterie 8. Der Reifenlüftungseinrichtung 1 ist des Weiteren ein Funkempfänger 9 zugeordnet. Dieser bezieht seine Energie ebenfalls aus der Batterie 8. Der Empfänger 9 dient zum Empfangen von Schaltsignalen auf einer Funkstrecke zum Ansteuern des Steuerventils 7, und zwar dann, wenn eine Reduzierung des Fülldruckes des Reifens gewünscht wird. Somit arbeitet die Reifenentlüftungseinrichtung 1 ohne eine notwendige Drehdurchführung.

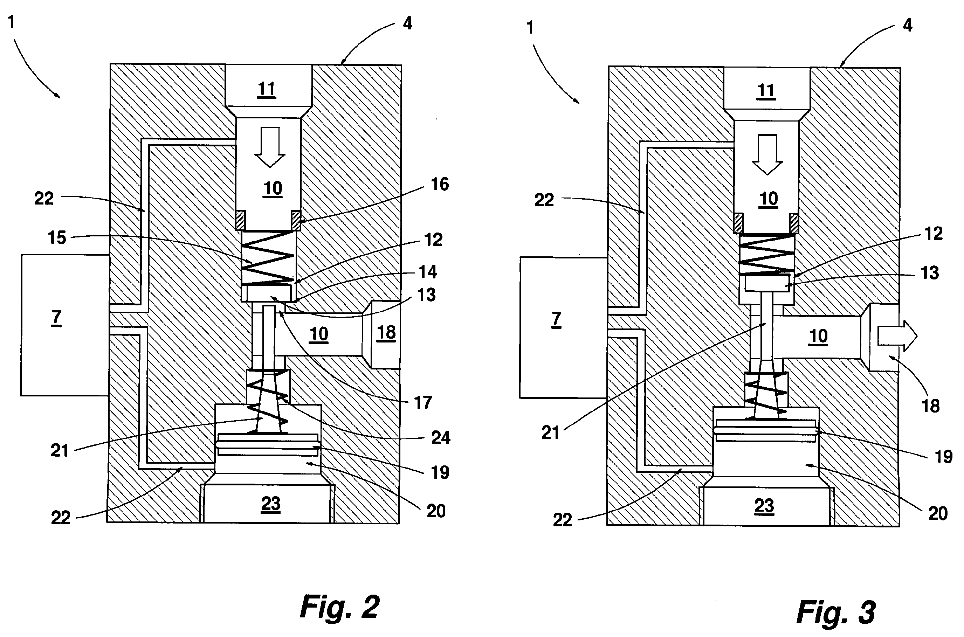

Figur 2 zeigt in einem schematisierten Schnitt den Aufbau des Ventilblockes 4. Der Luftablasskanal ist darin mit dem Bezugszeichen 10 kenntlich gemacht. In den Eingang 11 des Luftablasskanals 10 ist ein in der Figur nicht dargestellter Anschlussstutzen eingeschraubt, auf den der Schlauch 5 aufgesetzt ist. Der Luftablasskanal 10 umfasst einen ersten Abschnitt. Die Luftablassrichtung ist darin durch einen Blockpfeil kenntlich gemacht. Dieser erste Abschnitt des Luftablasskanals 10 ist durch ein Rückschlagventil 12 begrenzt. Das Rückschlagventil 12 umfasst einen Ventilkörper 13, der in seiner den Luftablasskanal 10 in Ablassrichtung sperrenden Stellung abgedichtet gegen seinen Ventilsitz 14 wirkt. Der Ventilkörper 13 ist nach Art einer Scheibe ausgeführt. Zum Unterstützen der Abdichtung des Ventilkörpers 13 an dem Ventilsitz 14 dient eine Rückstellfeder 15, die sich rückwärtig an einem in den Luftablasskanal 10 eingesetzten Stützring 16 abgestützt. Somit liegt an der Seite des Ventilkörpers 13, an dem sich die Rückschlagfeder 15 befindet, der im Reifeninneren herrschende Druck an. Auf der anderen Seite des Ventilkörpers 13 herrscht Umgebungsdruck. In Figur 2 befindet sich unterhalb des Ventilsitzes 14 eine Ventilöffnung 17, in die sich der Luftablasskanal 10 fortsetzt. Daran anschließend ist dieser in einem Winkel von 90 Grad weitergeführt und endet in einem die Schmutzkappe 6 haltenden Ausgang 18. In Figur 2 ist der Einfachheit halber die Schmutzkappe 16 nicht dargestellt. Die Schmutzkappe 6 hat entsprechende Wegsamkeiten, damit Luft aus dem Luftablasskanal 10 ohne weiteres in die Umgebung entweichen kann, wenn das Rückschlagventil 12 geöffnet ist.

In dem Ventilblock 4 ist des Weiteren ein Steuerkolben 19 in einer Zylinderbohrung 20 verstellbar geführt. Der Steuerkolben 19 trägt eine Kolbenstange 21, die aus der Zylinderbohrung 20 in Richtung zu dem Rückschlagventil 12 herausgeführt ist. Die Kolbenstange 21 dient als Betätigungsstange zum Abheben des Ventilkörpers 13 von seinem Ventilsitz 14, mithin zum Öffnen des Rückschlagventils 12. Die Längsachse des Steuerkolbens 19 mit seiner Kolbenstange 21 fluchtet mit der axialen Erstreckung der Ventilöffnung 15. Der Steuerkolben 19 ist einseitig pneumatisch ansteuerbar. Zu diesem Zweck ist eine Steuerleitung 22 in den Ventilblock 4 eingebracht, deren Eingang in dem ersten Abschnitt des Luftauslasskanals 10 und deren Ausgang an der von der Kolbenstange 21 abgewandten Seite des Steuerkolbens 19 in die Zylinderbohrung 20 mündet. In die Steuerleitung 22 ist das elektromagnetische Steuerventil 7 eingeschaltet. Da der eingangsseitige Abschnitt der Steuerleitung 22, also: derjenige Abschnitt der Steuerleitung 22, der den stromaufwärts bezüglich des Rückschlagventils 12 befindlichen Abschnitt des Luftablasskanals 10 mit dem Steuerventil 7 verbindet, liegt der im Reifeninneren herrschende Druck ebenfalls am Eingang des Steuerventils 7 an. Wird das Steuerventil 7 geöffnet, wird durch diesen Druck der zweite Abschnitt der Steuerleitung 22, der das Steuerventil 7 mit der Zylinderbohrung 20 verbindet, beaufschlagt, so dass dieser Druck auch auf der Aktivierungsseite des Steuerkolbens 19 in der Zylinderbohrung 20 anliegt. Die Zylinderbohrung 20 ist durch einen Verschlussstopfen 23 abgedichtet verschlossen. Auf der Seite der Kolbenstange 21 des Steuerventils 19 herrscht dagegen Umgebungsdruck.

Im Falle einer gewünschten Erniedrigung des in dem Reifen, an den die Einrichtung 1 angeschlossen ist, befindlichen Fülldruckes wird ein entsprechendes Schaltsignal gesendet, von dem Funkempfänger 9 empfangen, der wiederum das Steuerventil 7 ansteuert, damit dieses in seine Offenstellung geschaltet wird. Ist das Steuerventil 7 bestromt, befindet sich dieses in seiner Offenstellung. Ist das Steuerventil 7 dagegen stromlos, ist dieses geschlossen. In der Offenstellung des Steuerventils 7 strömt vom Reifeninneren Luft über die Steuerleitung 22 in die Zylinderbohrung 20, und zwar auf die Aktivierungsseite des Steuerkolbens 19 und drückt diesen gegen die Kraft einer Rückstellfeder 24 in Richtung zu dem Rückschlagventil 12. Die Kolbenfläche des Steuerkolbens 19 ist, wie aus Figur 2 deutlich erkennbar, deutlich größer als die Querschnittsfläche des von der Kolbenstange 21 von seinem Ventilsitz 14 abzuhebenden Ventilkörpers 13. Infolge dessen wird, nachdem die Kolbenstange 21 zur Anlage an den Ventilkörper 13 gelangt ist, diese den Ventilkörper 13 von seinem Ventilsitz 14 abheben, wodurch das Rückschlagventil 12 geöffnet wird. Diese geöffnete Stellung des Rückschlagventils 12 ist in Figur 3 gezeigt. In dieser Stellung strömt sodann aus dem Reifeninneren über die Wegsamkeit des Luftablasskanals 10 des Ventilblockes 4 Luft aus dem Reifen aus, wodurch der Reifeninnendruck erniedrigt wird. Infolge der relativ großen Querschnittsfläche des Luftablasskanals 10 erfolgt eine Erniedrigung des Reifendruckes um den gewünschten Betrag in kurzer Zeit. Das Steuerventil 7 wird solange in seiner Offenstellung gehalten, bis der Vorgang der gewünschten Reifendruckerniedrigung abgeschlossen ist. Anschließend wird das Steuerventil 7 geschlossen, was typischerweise mit einer Entlüftung des das Steuerventil 7 mit dem Zylinderraum 20 verbindenden Abschnittes der Steuerleitung 22 einhergeht.

Angesteuert werden kann das Steuerventil 7 zum Schließen der Steuerleitung 22 durch Absetzen eines entsprechenden Steuerbefehles auf der Funkstrecke. Es versteht sich, dass die vorbeschriebene Einrichtung sich auch über einen Regelkreis steuern lässt, gemäß dem die gewünschte Reifendruckerniedrigung dann beendet wird, wenn der gewünschte Reifendruck, durch einen Sensor erfasst, erreicht ist. In einem solchen Fall wird mit dem Sendebefehl zum Erniedrigen des Reifendruckes ebenfalls der Zieldruck übermittelt. Nach Beendigung eines Luftablassvorganges herrscht durch den verbleibenden Druck im Reifen stromauf des Rückschlagventils 12 innerhalb des Luftablasskanals 10 nach wie vor ein auf den Ventilkörper 13 des Rückschlagventils 12 wirkender Überdruck. Der Schließvorgang des Ventilkörpers des Rückschlagventils 12 wird durch die Rückstellfeder 15 unterstützt, damit ein bestimmungsgemäßes Schließen auch bei nur geringem, im Reifen verbleibendem Druck oder bei einem Ausfall der Steueraktoren zuverlässig erfolgt. Die auf den Steuerkolben 19 wirkende Rückstellfeder 24 sorgt dafür, dass dieser mit seiner Kolbenstange 21 in seine in Figur 2 gezeigte Ausgangsposition zurückgeführt wird.

Der Querschnitt der Steuerleitung 22 ist verglichen mit dem Querschnitt des Luftablasskanals 10 um ein Vielfaches geringer. Dem zur Folge ist auch das elektromagnetische Steuerventil 7 klein dimensioniert und benötigt nur wenig elektrische Energie, um in seine Offenstellung gebracht und in dieser für die Zeitspanne der Reifendruckabsenkung offen gehalten zu werden.

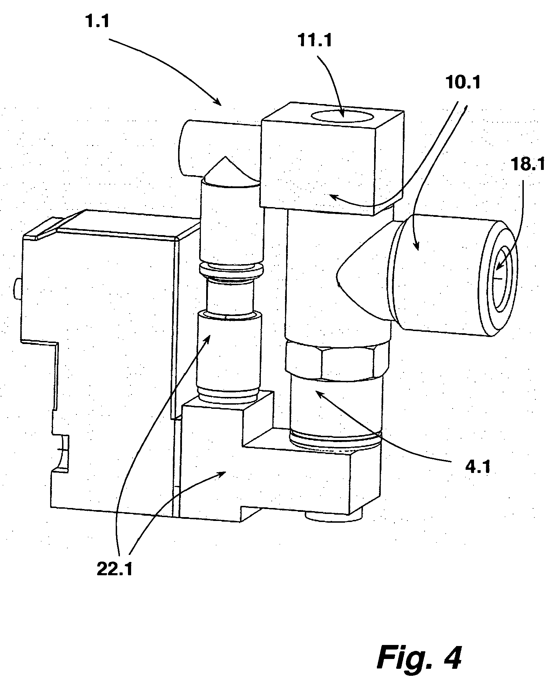

Figur 4 zeigt eine weitere Einrichtung 1.1 zum Erniedrigen des Fülldruckes eines luftgefüllten Fahrzeugreifens. Die Einrichtung 1.1 ist aufgebaut wie die unter Bezug auf die Figuren 1 bis 3 beschriebene Einrichtung 1. Im Unterschied zu der Einrichtung 1 ist bei der Einrichtung 1.1 der Ventilblock 4.1 nicht als Block im engeren Sinne ausgeführt, sondern durch Verbinden einzelner Bauteile. Diese bilden den Luftablasskanal 10.1, die Zylinderbohrung 20 sowie die Steuerleitung 22.1. Der radseitige Eingang in die Luftablassleitung 10.1 trägt das Bezugszeichen 11.1. Der Ausgang ist mit 18.1 markiert.

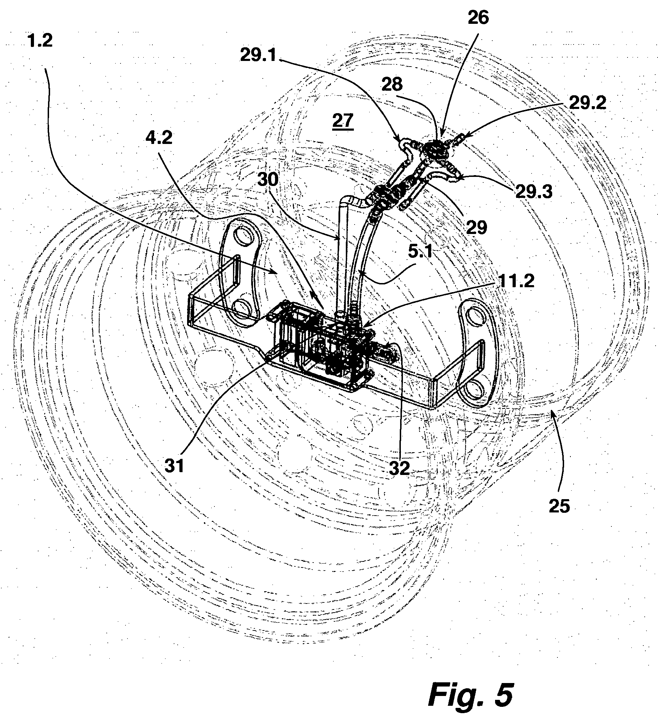

Figur 5 zeigt in einer perspektivischen Ansicht eine weitere Einrichtung 1.2 zum Erniedrigen des Fülldruckes eines luftgefüllten Fahrzeugreifens. Die Einrichtung 1.2 ist in ihrer Einbausituation an einem Rad 25 dargestellt. Das Rad 25 ist transparent dargestellt, um auch die an der radial nach innen weisenden Innenseite des Felgenbettes befindlichen Komponenten erkennen zu können. Die Reifenentlüftungseinrichtung 1.2 ist aufgebaut, wie die unter Bezug auf die Figuren 1 bis 3 beschriebene Einrichtung 1. Im Unterschied zu den vorbeschriebenen Einrichtungen 1, 1.1 ist bei der Reifenentlüftungseinrichtung 1.2 ein Verteilerstück 26 vorgesehen, durch welches der Zugang in das Reifeninnere bereitgestellt ist. Das Verteilerstück 26 ist am Felgenbett 27 des Rades 25 verschraubt und verfügt über eine in das Reifeninnere mündende Bohrung 28. Das Verteilerstück 26 verfügt bei dem dargestellten Ausführungsbeispiel über mehrere Anschlüsse 29, 29.1, 29.2, 29.3. Die Anschlüsse 29, 29.1, 29.2, 29.3 stehen mit der Bohrung 28 in Verbindung. Der Anschluss 29 ist der Abgang des Verteilerstückes 26, mit dem dieses mit dem für die Entlüftung dienenden Eingang 11.2 des Ventilblockes 4.2 verbunden ist. Zur Verbindung des Anschlusses 29 mit dem Eingang 11.2 dient ein Schlauch 5.1. Der Anschluss 29.1 des Ventilstückes 26 ist über einen Steuerkanal 30 an einen Steuerleitungseingang 31 des Ventilblockes 4.2 angeschlossen. Somit unterscheidet sich der Ventilblock 4.2 von dem Ventilblock 4 dadurch, dass sich der Eingang der Steuerleitung nicht in dem eingangsseitigen Luftablasskanal des Ventilblockes 4, sondern unmittelbar am Verteilerstück 26 und damit am Reifen befindet. Die freie Querschnittsfläche des Steuerkanals 30 zum Beaufschlagen des in dem Ventilblock 4.2 befindlichen Steuerventils ist deutlich kleiner als die freie durchströmbare Querschnittsfläche in der Verbindung des Verteilerstückes 26 mit dem Eingang 11.2 des Ventilblockes 4.2.

Die beiden weiteren Anschlüsse 29.2 und 29.3 des Ventilstückes 26 sind bei der in Figur 5 gezeigten Anwendung verschlossen. Der Anschluss 29.2 kann beispielsweise für eine Verbindung mit dem Reifeninneren eines zu dem Rad 25 angeordneten Zwillingsrades vorgesehen sein. Der Anschluss 29.3 kann einer Reifenbefüllung dienen und wäre in einem solchen Fall endseitig mit einem Reifenventil bestückt.

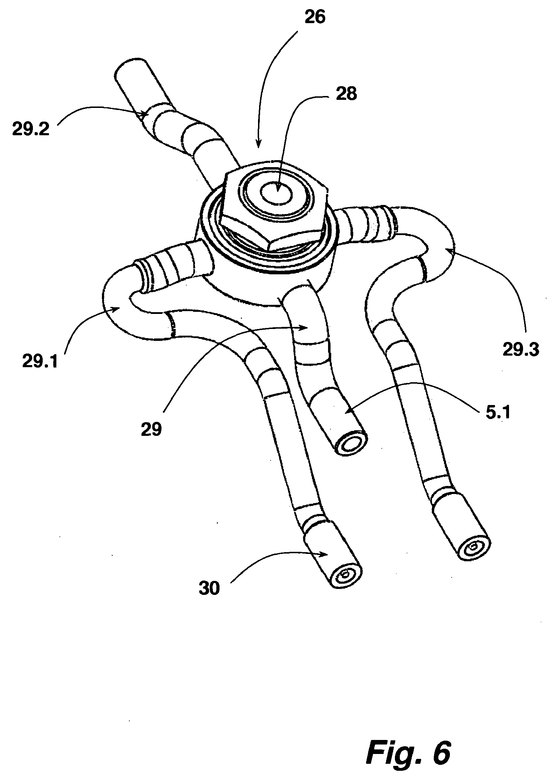

Figur 6 zeigt das Verteilerstück 26 in einer Einzeldarstellung, in der die Lage der Bohrung 28 und die Anschlüsse 29, 29.1, 29.2 und 29.3 besser zu erkennen sind. Die genannten Anschlüsse stehen über entsprechende Querbohrungen mit der Bohrung 28 in Verbindung.

Bei der Reifenentlüftungseinrichtung 1.2 ist an den Luftablasskanal des Ventilblockes 4.2 ein Entlüftungsventil 32 angeschlossen, durch welches die aus dem Reifen abgelassene Luft hindurch tritt. Das Entlüftungsventil 32 dient dem Zweck, einen Schmutzeintrag in den Ventilblock 4.2 zu verhindern. Daher ist das durch das Entlüftungsventil 32 bereitgestellte Gegenmoment, welches überwunden werden muss, damit aus dem Reifeninneren Luft abgelassen werden kann, nur gering. Allerdings kann dieses Entlüftungsventil auch genutzt werden, um eine untere Grenze einer Reifenentlüftung zu gewährleisten. Dann wird man das Entlüftungsventil 32 dergestalt auslegen, dass der bei einer Reifenentlüftung zu überwindende Gegendruck dem vorgesehenen minimalen Reifeninnendruck entspricht.

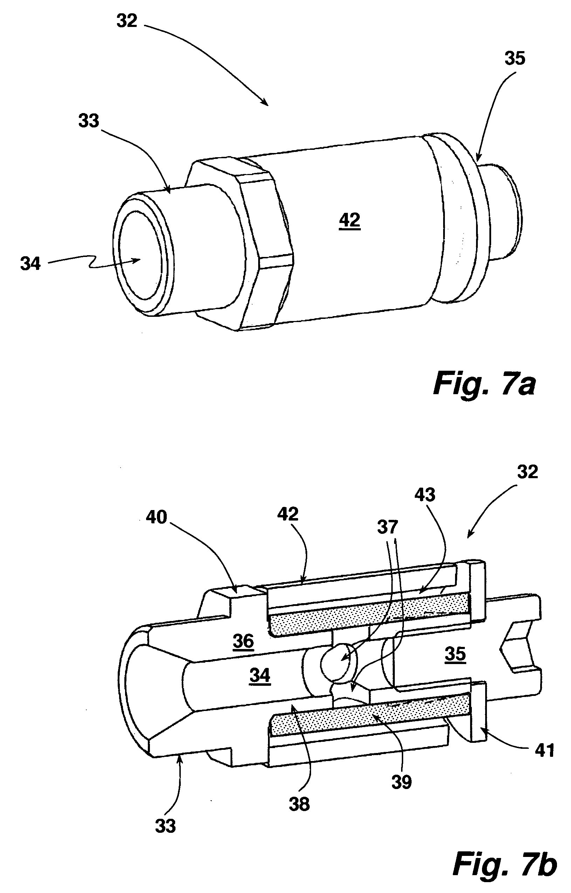

Das Entlüftungsventil 32 ist in einer perspektivischen Ansicht und von dem Ventilblock 4.2 abgenommen in Figur 7a gezeigt. Das Entlüftungsventil 32 verfügt über ein Anschlussgewinde 33, mit dem dieses in den mit einem Innengewinde versehenen Ausgang des Ventilblockes 4.2 eingeschraubt ist. Das Entlüftungsventil 32 verfügt über einen zentralen Strömungskanal 34, der an seinem dem Anschlussgewinde 32 gegenüberliegenden Ende durch einen Verschlusskörper 35 verschlossen ist. Bei dem dargestellten Ausführungsbeispiel ist der Verschlusskörper 35 in den Strömungskanal 34 eingeschraubt. Der Ventilkörper 36 (s. Figur 7b) des Entlüftungsventils 32 verfügt über mehrere Querbohrungen, durch die die aus dem Reifeninneren abgelassene Luft hindurch tritt. Die Querbohrungen 37 befinden sich in einem zylindrischen Abschnitt 38 des Ventilkörpers 36. Auf den zylindrischen Abschnitt 38 ist ein Silikonschlauchstück 39 aufgeschoben, so dass dieses an der äußeren Mantelfläche des zylindrischen Abschnitts 38 anliegt. Ein Entweichen von Luft durch das Entlüftungsventil 32 ist möglich, wenn der in dem Strömungskanal 34 herrschende Druck größer ist als die durch das Silikonschlauchstück 39 auf die Ausgänge der Querbohrungen 37 wirkende Vorspannung.

Der Ventilkörper 36 trägt an der zum Anschlussgewinde 33 weisenden Begrenzung des zylindrischen Abschnittes 38 einen Flansch 40. Der Verschlusskörper 35 ist unter Zwischenschaltung einer Scheibe 41 an den Ventilkörper 36 angeschlossen. Das Silikonschlauchstück 39 befindet sich zwischen dem Flansch 40 und der Scheibe 41 und wird durch diese Begrenzungen in seiner die Querbohrungen 37 bedeckenden Stellung gehalten. Unter Belassung eines Ringspaltes zu der Außenseite des Silikonschlauchstückes 39 ist eine Metallhülse 42 zwischen dem Flansch 40 und der Scheibe 41 gehalten. Die Metallhülse 42 dient zum Fernhalten von schädlicher UV-Strahlung von dem Silikonschlauchstück 39 sowie zum Abhalten von mechanischen Einwirkungen darauf. Die Metallhülse 42 ist, wie aus Figur 7a erkennbar, an ihrem einen Ende abgeschrägt, um eine hinreichende Austrittswegsamkeit für über die Querbohrungen 37 ausströmende Luft bereitzustellen. Dabei dient der Luftspalt 43 zwischen dem Silikonschlauchstück 39 und der Metallhülse 42 dem Zweck, dem Silikonschlauchstück 39 einen genügenden Bewegungsraum zur Verfügung stellen, damit dieser bei Anliegen eines entsprechenden Innendruckes von den Querbohrungen 37 abhebt und die gewünschte Reifenentlüftung stattfinden kann.

Das Entlüftungsventil 32 ist als Teil der Reifenentlüftungseinrichtung 1.2 beschrieben worden. Gleichwohl wird aus der Beschreibung des Reifenentlüftungsventils 32 deutlich, dass dieses auch für andere Zwecke, insbesondere andere Reifenbefüllungs- und/oder Entlüftungseinrichtungen verwendet werden kann.

Die Reifenentlüftungseinrichtung 1 ist mit einer Stromversorgung durch die Batterie 8 beschrieben worden, wobei sowohl das Steuerventil 7 als auch der Funkempfänger 9 von dieser gespeist werden. Eine entsprechende Stromversorgung können auch die beiden weiteren beschriebenen Reifenentlüftungseinrichtungen 1.1 bzw. 1.2 aufweisen. Anstelle einer Stromversorgung, wie vorbeschrieben, ist in einer alternativen Ausgestaltung eine Stromversorgung wie folgt vorgesehen: Eine erste Batterie dient zur Stromversorgung des Steuerventils. Eine zweite Batterie dient zur Versorgung des Kommunikationsmoduls, das beispielsweise als Funkempfänger oder als bidirektionales Funkmodul ausgebildet sein kann. Die das Kommunikationsmodul speisende Batterie ist typischerweise als sogenannte Knopfzelle ausgeführt und auf der Platine des Funkmoduls angeordnet. Eine solche Trennung der Stromversorgung hat zum Vorteil, dass auch bei entladener, das elektromagnetische Steuerventil speisender Batterie nach wie vor eine Kommunikation möglich ist. Vor allem wenn Teil der Einrichtung ebenfalls ein Drucksensor zum Erfassen des im Reifeninneren befindlichen Druckes ist, wobei die diesbezüglichen elektrischen/elektronischen Bestandteile ebenfalls Teil der für die Kommunikation vorgesehenen Platine sind, kann eine Reifendruckmessung auch bei entladener, zur Speisung des elektronischen Steuerventils vorgesehener Batterie erfolgen. Dieses ist vor allem dann zweckmäßig, wenn die Reifenentlüftungseinrichtung Teil eines Reifendrucküberwachungssystems ist. Von Vorteil ist bei einem Einsatz zweier getrennter Energiequellen auch, dass die Reifenentlüftungseinrichtung als solche beim Tausch der für die Kommunikation und gegebenenfalls der Reifendrucküberwachung dienenden Batterie, beispielsweise einer solchen Knopfzelle nicht neu am System angemeldet werden muss, wenn die Identifikation des Kommunikationsmoduls und der Reifendruckmesseinrichtung, die in einem flüchtigen Speicher hinterlegt sind, durch entsprechende Speisung durch die andere Batterie gepuffert wird. Entsprechendes gilt auch bei einem Tausch der zur Speisung des elektronischen Steuerventils vorgesehenen Batterie, falls auch bezüglich des Steuerventils bzw. seiner Ansteuerelektronik eine systemseitige Anmeldung mit einer Kennung erforderlich ist, dass der flüchtige Speicher durch die andere Batterie gepuffert wird. Dieses macht deutlich, dass in einem solchen Fall die zweite Batterie jeweils Sorge dafür trägt, dass die Kennung jeweils verloren geht.

Dass sich die vorbeschriebenen Einrichtungen in ein Reifendrucküberwachungssystem einschalten lassen, ist bereits vorbeschrieben worden. Integrieren lassen sich diese auch in weitere fahrzeugseitig vorhandene Sensorik einer Achs- bzw. Radlastenerfassung, Fahrgeschwindigkeitserfassung sowie Reifentemperaturerfassung, um sodann entsprechend der gewonnenen Daten eine Reifendruckerniedrigung, sollte dieses angezeigt sein, herbeiführen zu können.

**Bezugszeichenliste**

| | | | |
|---|---|---|---|
| 1, 1.1, 1.2 | Reifenentlüftungseinrichtung | 35 | Verschlusskörper |
| 2 | Träger | 36 | Ventilkörper |
| 3, 3.1 | Befestigungsbolzen | 37 | Querbohrung |
| 4, 4.1, 4.2 | Ventilblock | 38 | zylindrischer Abschnitt |
| 5,5.1 | Schlauch | 39 | Silikonschlauchstück |
| 6 | Schutzkappe | 40 | Flansch |
| 7 | Steuerventil | 41 | Scheibe |
| 8 | Batterie | 42 | Metallhülse |
| 9 | Funkempfänger | 43 | Luftspalt |
| 10, 10.1 | Luftablasskanal | | |
| 11, 11.1, 11.2 | Eingang | | |
| 12 | Rückschlagventil | | |
| 13 | Ventilkörper | | |
| 14 | Ventilsitz | | |
| 15 | Rückstellfeder | | |
| 16 | Stützring | | |
| 17 | Ventilöffnung | | |
| 18, 18.1 | Ausgang | | |
| 19 | Steuerkolben | | |
| 20 | Zylinderbohrung | | |
| 21 | Kolbenstange | | |
| 22 | Steuerleitung | | |
| 23 | Verschlussstopfen | | |
| 24 | Rückstellfeder | | |
| 25 | Rad | | |
| 26 | Verteilerstück | | |
| 27 | Felgenbett | | |
| 28 | Bohrung | | |
| 29, 29.1, 29.2, 29.3 | Anschluss | | |
| 30 | Steuerkanal | | |
| 31 | Steuerleitungseingang | | |
| 32 | Entlüftungsventil | | |
| 33 | Anschlussgewinde | | |
| 34 | Strömungskanal | | |

## Patentansprüche

1. Einrichtung zum Reduzieren des in einem Fahrzeugluftreifen befindlichen Fülldruckes, umfassend einen Ventilblock (4, 4.1, 4.2) mit einem diesen durchgreifenden Luftablasskanal (10, 10.1), an dessen Eingang (11, 11.1, 11.2) der Reifeninnendruck ansteht und dessen Ausgang (18, 18.1) in die Umgebung mündet, in welchen Luftablasskanal (10, 10.1) ein in Richtung zum Ausgang (18, 18.1) schließendes, einen Ventilkörper (13) umfassendes Rückschlagventil (12) eingeschaltet ist, und einem in einer in dem Ventilblock (4, 4.1, 4.2) befindlichen Zylinderbohrung (20), pneumatisch einseitig ansteuerbaren Steuerkolben (19) mit einer Kolbenfläche, die größer ist als die Querschnittsfläche des Ventilskörpers (13) des Rückschlagventils (12), **dadurch gekennzeichnet, dass** der Steuerkolben (14) eine als Stellstange ausgeführte Kolbenstange (21) aufweist, wobei der Steuerkolben (19) mit seiner Kolbenstange (21) zu dem Ventilkörper (13) des Rückschlagventils (12) dergestalt angeordnet ist, dass der Steuerkolben (19), wenn pneumatisch betätigt, mit seiner Kolbenstange (21) auf den Ventilkörper (13) des Rückschlagventils (12) wirkt, und dass der Ventilblock (4, 4.1, 4.2) eine durch den Reifeninnendruck beaufschlagte pneumatische Steuerleitung (22), die auf der Betätigungsseite des Steuerkolbens (19) in die Zylinderbohrung (20) mündet, und ein Steuerventil (7) zum Öffnen und Schließen der pneumatischen Steuerleitung (22) aufweist.

2. Einrichtung nach Anspruch 1, **dadurch gekennzeichnet, dass** auf den Steuerkolben (19) eine entgegen seiner pneumatischen Betätigungsrichtung wirkende Rückstellfeder (24) wirkt.

3. Einrichtung nach Anspruch 1 oder 2, **dadurch gekennzeichnet, dass** auf den Ventilkörper (13) des Rückschlagventils (12) eine Rückstellfeder (24) wirkt, um diesen in seiner Rückschlagstellung abgedichtet gegen sein Ventilsitz (14) zu drücken.

4. Einrichtung nach einem der Ansprüche 1 bis 3, **dadurch gekennzeichnet, dass** der Durchmesser der Steuerleitung (22) um ein Mehrfaches geringer ist als der Durchmesser des Luftablasskanals (10, 10.1) bzw. einer das Reifeninnere mit dem Luftablasskanal verbindenden Wegsamkeit.

5. Einrichtung nach einem der Ansprüche 1 bis 4, **dadurch gekennzeichnet, dass** der Luftablasskanal (10, 10.1), dem Rückschlagventil (12) nachgeschaltet, winkelig ausgeführt ist und die Längsachse des Steuerkolben (19) mit seiner Kolbenstange (21) mit der Längsachse der Ventilöffnung (17) des Rückschlagventils (12) fluchtend angeordnet ist.

6. Einrichtung nach einem der Ansprüche 1 bis 5, **dadurch gekennzeichnet, dass** die Kolbenstange (21) an ihrem Betätigungsende zum Durchgreifen der Ventilöffnung des Rückschlagventils (12) verjüngt ist.

7. Einrichtung nach einem der Ansprüche 1 bis 6, **dadurch gekennzeichnet, dass** die Ausgangsmündung (18, 18.1) des Luftablasskanals (10, 10.1) mit einer Schmutzkappe (6) verschlossen ist.

8. Einrichtung nach einem der Ansprüche 1 bis 6, **dadurch gekennzeichnet, dass** die Schmutzkappe als Entlüftungsventil (32) ausgeführt ist.

9. Einrichtung nach einem der Ansprüche 1 bis 8, **dadurch gekennzeichnet, dass** die Einrichtung (1.2) ein Felgenbett montierbares Verteilerstück (26) umfasst, durch das ein Zugang zum Reifeninneren geschaffen ist und welches zumindest zwei an den Zugang zum Reifeninneren angeschlossene Anschlüsse (29, 29.1, 29.2, 29.3) aufweist, wobei einer dieser Anschlüsse (29) zum Herstellen einer Verbindung zwischen dem Reifeninneren und dem Luftablasskanal des Ventilblockes (4.2) und ein weiterer Anschluss (29.1) als Steuerleitungsanschluss dient.

10. Einrichtung nach einem der Ansprüche 1 bis 9, **dadurch gekennzeichnet, dass** das Steuerventil (7) als elektromagnetisch arbeitendes Ventil ausgeführt ist und der Einrichtung (1, 1.1, 1.2) ein Stromspeicher (8), etwa eine Batterie als Energiequelle zum Betreiben des Steuerventils (7) zugeordnet ist.

11. Einrichtung nach Anspruch 10, **dadurch gekennzeichnet, dass** die Einrichtung (1, 1.1, 1.2) über einen Funkempfänger (9) zum Empfangen von Schaltbefehlen zum Ansteuern des Steuerventils (7) verfügt.

## Claims

1. Device for reducing the inflation pressure in a vehicle pneumatic tyre, comprising a valve block (4, 4.1, 4.2) with an air discharge duct (10, 10.1) which engages through the latter, and at the inlet (11, 11.1, 11.2) of which the tyre internal pressure is present and the outlet (18, 18.1) of which opens into the surroundings, into which air discharge duct (10, 10.1) a non-return valve (12) is connected, which closes in the direction of the outlet (18, 18.1) and comprises a valve body (13), and a control piston (19) which can be actuated pneumatically on one side, in a cylinder drilled hole (20) located in the valve block (4, 4.1, 4.2), said control piston having a piston face which is larger than the cross-sectional area of the valve body (13) of the non-return valve (12), **characterised in that** the control piston (19) comprises a piston rod (21) which is configured as an actuating rod, wherein the control piston (19) is arranged with its piston rod (21) with respect to the valve body (13) of the non-return valve (12) in such a way that, when actuated pneumatically, the control piston (19) acts with its piston rod (21) on the valve body (13) of the non-return valve (12), and that the valve block (4, 4.1, 4.2) comprises a pneumatic control line (22) to which the tyre internal pressure is applied and which opens on the activation side of the control piston (19), and a control valve (7) for the opening and closing of the pneumatic control line (22).

2. Device according to claim 1, **characterised in that** a return spring (24) takes effect on the control piston (19), working against its pneumatic activation direction.

3. Device according to claim 1 or 2, **characterised in that** a return spring (24) takes effect on the valve body (13) of the non-return valve (12), in order to press this in its return position, sealed against its valve seat (14).

4. Device according to any one of claims 1 to 3, **characterised in that** the diameter of the control line (22) is smaller by a multiple than the diameter of the air discharge duct (10, 10.1) or, respectively, a passage connecting the tyre interior to the air discharge duct.

5. Device according to any one of claims 1 to 4, **characterised in that** the air discharge duct (10, 10.1) is downstream of the non-return valve (12), is configured as angular, and the longitudinal axis of the control piston (19) is arranged flush with the longitudinal axis of the valve opening (17) of the non-return valve (12).

6. Device according to any one of claims 1 to 5, **characterised in that** the piston rod (21) tapers at its activation end in order to engage through the valve opening of the non-return valve (12).

7. Device according to any one of claims 1 to 6, **characterised in that** the outlet aperture (18, 18.1) of the air discharge duct (10, 10.1) is closed with a dirt cap (6).

8. Device according to any one of claims 1 to 6, **characterised in that** the dirt cap is configured as an air discharge valve (32).

9. Device according to any one of claims 1 to 8, **characterised in that** the device (1.2) comprises a distribution element (26) which can be fitted to the wheel rim bed, through which access is provided to the tyre interior, and which comprises at least two connections (29, 29.1, 29.2, 29.3) connected to the access to the tyre interior, wherein on of these connections (29) serves to create a connection between the tyre interior and the air discharge duct of the valve block (4.2), and a further connection (29.1) as a control line connection.

10. Device according to any one of claims 1 to 9, **characterised in that** the control valve (7) is configured as an electromagnetically working valve, and a current storage element (8), such as a battery, is allocated to the device (1, 1.1, 1.2) as an energy source for the operation of the control valve (7).

11. Device according to claim 10, **characterised in that** the device (1, 1.1, 1.2) is provided with a radio receiver (9) for receiving switching commands for actuating the control valve (7).

## Revendications

1. Mécanisme destiné à réduire la pression de gonflage d'un pneu de véhicule, comprenant un bloc à valve (4, 4.1, 4.2) traversé par un canal de décompression (10, 10.1) en contact à son entrée (11, 11.1, 11.2) avec la pression interne du pneu et dont la sortie (18, 18.1) débouche dans l'environnement, dans lequel canal de décompression (10, 10.1) est monté un clapet anti-retour (12), avec un corps de clapet (13), qui se ferme en direction de la sortie (18, 18.1), et comprenant un piston pilote (19) logé dans le bloc à valve (4, 4.1, 4.2) dans un alésage de cylindre (20) pouvant être piloté de façon pneumatique par un côté, doté d'une surface de piston plus grande que la surface de section du corps de clapet (13) du clapet anti-retour (12), **caractérisé en ce que** le piston pilote (19) présente une tige (21) de piston conformée en tige de réglage, le piston pilote (19) étant disposé avec sa tige (21) de piston par rapport au corps de clapet (13) du clapet anti-retour (12) de telle manière que le piston pilote (19), lorsqu'il est actionné pneumatiquement, agit avec sa tige (21) de piston sur le corps de clapet (13) du clapet anti-retour (12) et que le bloc à valve (4, 4.1, 4.2) présente une ligne pilote (22) actionnée pneumatiquement par la pression à l'intérieur du pneu, qui débouche du côté de l'actionnement du piston pilote (19) dans l'alésage du cylindre (20) ainsi qu'une soupape pilote (7) destinée à ouvrir et fermer la ligne pilote (22) pneumatique.

2. Mécanisme selon la revendication 1, **caractérisé en ce qu**'un ressort de rappel (24) agit sur le piston pilote (19) contre son sens d'actionnement pneumatique.

3. Mécanisme selon la revendication 1 ou 2, **caractérisé en ce qu**'un ressort de rappel (24) agit sur le corps de clapet (13) du clapet anti-retour (12) afin de repousser ce dernier dans sa position de retour étanche contre son siège de soupape (14).

4. Mécanisme selon l'une des revendications 1 à 3, **caractérisé en ce que** le diamètre de la ligne pilote (22) est plusieurs fois inférieur au diamètre du canal de décompression (10, 10.1) ou d'une voie reliant l'intérieur du pneu avec le canal de décompression.

5. Mécanisme selon l'une des revendications 1 à 4, **caractérisé en ce que** le canal de décompression (10, 10.1) est monté à l'aval du clapet anti-retour (12), est conformé en coude et disposé en alignant l'axe longitudinal du piston pilote (19) comprenant sa tige (21) de piston avec l'axe longitudinal de l'ouverture de clapet (17) du clapet anti-retour (12).

6. Mécanisme selon l'une des revendications 1 à 5, **caractérisé en ce que** la tige de piston (21) est rétrécie à son extrémité d'actionnement afin de traverser l'ouverture de clapet du clapet anti-retour (12).

7. Mécanisme selon l'une des revendications 1 à 6, **caractérisé en ce que** l'embouchure de sortie (18, 18.1) du canal de décompression (10, 10.1) est fermée par un capuchon (6) contre les impuretés.

8. Mécanisme selon l'une des revendications 1 à 6, **caractérisé en ce que** le capuchon contre les impuretés est conformé en soupape de purge (32).

9. Mécanisme selon l'une des revendications 1 à 8, **caractérisé en ce que** le mécanisme (1.2) comprend un élément de distribution (26) pouvant être monté dans une base de jante, à travers lequel est créé un accès vers l'intérieur du pneu et lequel présente au moins deux raccords (29, 29.1, 29.2, 29.3) raccordés à l'accès vers l'intérieur du pneu, l'un de ces raccords (29) servant à réaliser une liaison entre l'intérieur du pneu et le canal de décompression du bloc à valve (4.2) et un autre raccord (29.1) servant au raccordement à la ligne pilote.

10. Mécanisme selon l'une des revendications 1 à 9, **caractérisé en ce que** la soupape pilote (7) est conformée en soupape électromagnétique et qu'un accumulateur (8) d'énergie, par exemple une batterie faisant office de source d'énergie pour actionner la soupape pilote (7) est affecté au mécanisme (1, 1.1, 1.2).

11. Mécanisme selon la revendication 10, **caractérisé en ce que** le mécanisme (1, 1.1, 1.2) dispose d'un récepteur radio (9) destiné à recevoir des ordres de commutation afin de commander la soupape pilote (7).
